# EUROPEAN PATENT APPLICATION

(11) **EP 4 845 143 A1**
(43) Date of publication of application: **25.11.2026**
(21) Application number: 24837202.1
(22) Date of filing: 23.12.2024
(51) Int. Cl.: H04N 7/18, B60R 1/27

(54) **PROCESSING SYSTEM AND PROCESSING METHOD**

(30) Priority: 17.01.2024 JP 2024005678
(71) Applicant: Robert Bosch GmbH, 70442 Stuttgart (DE)
(72) Inventor: WADA, Masaki, Yokohama-shi, Kanagawa 224-8501 (JP); MAKISE, Takeshi, Yokohama-shi, Kanagawa 224-8501 (JP); KURODA, Chika, Yokohama-shi, Kanagawa 224-8501 (JP); ZOELLNER, Karin, Yokohama-shi, Kanagawa 224-8501 (JP)
(74) Representative: Isarpatent
(86) International application number: PCT/IB2024/063099
(87) International publication number: WO 2025/153886

(57) **Abstract**

To create an added value by utilizing a surround view.

A processing system 1 includes: an acquisition unit that acquires first moving image data obtained by a plurality of cameras 12 provided to an outer circumferential portion of a vehicle 10 while the vehicle 10 is traveling; a storage unit that stores the first moving image data acquired by the acquisition unit; and a generation unit that generates second moving image data of a surround view which is a composite image of looking down the vehicle 10 from the outside based on the first moving image data stored in the storage unit.

## Description

### Technical Field

The present invention relates to a processing system and a processing method.

### Background Art

In recent years, for example, as disclosed in Patent Literature 1, a technology related to display control for assisting driving of a vehicle by a driver has been proposed.

### Citation List

### Patent Literature

PTL 1: US2015/0097860

### Summary of Invention

### Technical Problem

Display control for displaying a surround view may be used to assist driving by a driver at the time of parking a vehicle, for example. The surround view is a composite image of looking down the vehicle from the outside. For example, the driver can perform a driving operation while viewing the surround view, thereby parking the vehicle smoothly as if the driver were looking down the vehicle from the outside. Here, it is desired to create an added value by utilizing a surround view.

In view of the above-described problem, an object of the present invention is to provide a processing system and a processing method that can create an added value by utilizing a surround view.

### Solution to Problem

In order to solve the above-described problem, the processing system includes: an acquisition unit that acquires first moving image data obtained by a plurality of cameras provided to an outer circumferential portion of a vehicle while the vehicle is traveling; a storage unit that stores the first moving image data acquired by the acquisition unit; and a generation unit that generates second moving image data of a surround view which is a composite image of looking down the vehicle from the outside based on the first moving image data stored in the storage unit.

In order to solve the above-described problem, the processing method causes: an acquisition unit of a processing system to acquire first moving image data obtained by a plurality of cameras provided to an outer circumferential portion of a vehicle while the vehicle is traveling; a storage unit of the processing system to store the first moving image data acquired by the acquisition unit; and a generation unit of the processing system to generate second moving image data of a surround view which is a composite image of looking down the vehicle from the outside based on the first moving image data stored in the storage unit.

### Advantageous Effects of Invention

According to the invention, an added value can be created by utilizing a surround view.

### Brief Description of Drawings

Fig. 1 is a schematic diagram illustrating a schematic configuration of a processing system according to an embodiment of the invention.
Fig. 2 is a block diagram illustrating an example of a functional configuration of a processing apparatus according to the embodiment of the invention.
Fig. 3 is a block diagram illustrating an example of a functional configuration of a server according to the embodiment of the invention.
Fig. 4 is a block diagram illustrating an example of a functional configuration of a user terminal according to the embodiment of the invention.
Fig. 5 is a diagram illustrating an example of a surround view according to the embodiment of the invention.
Fig. 6 is a flowchart illustrating an example of a flow of accumulation processing for first moving image data performed by the processing apparatus according to the embodiment of the invention.
Fig. 7 is a flowchart illustrating an example of a flow of transmission processing for the first moving image data performed by the processing apparatus according to the embodiment of the invention.
Fig. 8 is a flowchart illustrating an example of a flow of generation processing for second moving image data performed by the server according to the embodiment of the invention.
Fig. 9 is a flowchart illustrating an example of a flow of transmission processing for the second moving image data performed by the server according to the embodiment of the invention.
Fig. 10 is a diagram illustrating an example in which the second moving image data illustrated in Fig. 5 is processed.
Fig. 11 is a diagram illustrating an example in which the second moving image data illustrated in Fig. 5 is processed.

### Description of Embodiments

A preferred embodiment of the invention will be described in detail below with reference to the accompanying drawings. Dimensions, materials, other specific numerical values, and the like described in the embodiment are only given as examples for facilitating understanding of the invention, and do not limit the invention unless otherwise specified. In the present specification and the drawings, components having substantially the same functions and configurations are denoted by the same reference signs to omit redundant descriptions, and components not directly related to the invention are not illustrated.

### Configuration of Processing System

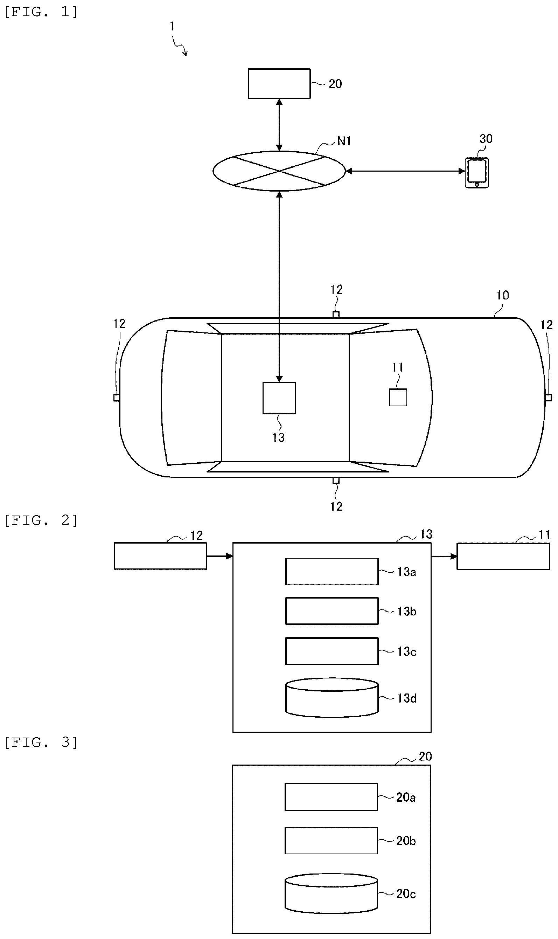

The configuration of a processing system 1 according to the embodiment of the invention will be described with reference to Fig. 1 to Fig. 4.

Fig. 1 is a schematic diagram illustrating a schematic configuration of the processing system 1. As illustrated in Fig. 1, the processing system 1 includes a vehicle 10, a server 20, and a user terminal 30. The vehicle 10, the server 20, and the user terminal 30 can communicate with each other via a communication network N1 in a wireless manner.

It should be noted that one vehicle 10 is illustrated in Fig. 1 for facilitating understanding, but the processing system 1 actually includes a plurality of vehicles 10. In addition, one user terminal 30 is illustrated in Fig. 1 for facilitating understanding, but the processing system 1 actually includes a plurality of user terminals 30.

As illustrated in Fig. 1, the vehicle 10 includes a display apparatus 11, a plurality of cameras 12, and a processing apparatus 13.

The drive source of the vehicle 10 is not particularly limited. For example, the vehicle 10 may include only a motor as the drive source, may include only an engine as the drive source, or may include both a motor and an engine as the drive sources.

The display apparatus 11 is an apparatus that visually displays various types of information. Examples of the display apparatus 11 include a liquid-crystal display.

The cameras 12 are provided to the outer circumferential portion of the vehicle 10 and capture images of the surroundings of the vehicle 10. In the example of Fig. 1, four cameras 12 are provided one-by-one to a front portion, a rear portion, a left side portion, and a right side portion of the vehicle 10. The camera 12 on the front side captures an image of the front of the vehicle 10. The camera 12 on the rear side captures an image of the rear of the vehicle 10. The camera 12 on the left side captures an image of the left side of the vehicle 10. The camera 12 on the right side captures an image of the right side of the vehicle 10. Each data obtained by the plurality of cameras 12 is used for displaying a surround view as will be described below. However, the number and arrangement of the cameras 12 are not limited to the example of Fig. 1. For example, the number of cameras 12 may be larger than that in the example of Fig. 1.

The processing apparatus 13 includes a central processing unit (CPU) which is an arithmetic processing unit, a read-only memory (ROM) which is a memory element storing programs, arithmetic parameters, and the like used by the CPU, and a random access memory (RAM) which is a memory element temporarily storing parameters that change appropriately in the execution of the CPU and the like. For example, one processing apparatus 13 may be provided, or the processing apparatus 13 may be divided into a plurality of apparatuses. When the processing apparatus 13 is divided into a plurality of apparatuses, among various types of functions to be described below, a part of the functions and another part of the functions may be implemented by different apparatuses.

Fig. 2 is a block diagram illustrating an example of a functional configuration of the processing apparatus 13. As illustrated in Fig. 2, the processing apparatus 13 includes, for example, an acquisition unit 13a, a communication unit 13b, a processing unit 13c, and a storage unit 13d.

The acquisition unit 13a acquires information from each apparatus in the vehicle 10. For example, the acquisition unit 13a acquires information from the cameras 12. It should be noted that in the present specification, acquisition of information includes extraction or generation of information (e.g., arithmetic operation), and the like.

The communication unit 13b communicates with an apparatus outside the vehicle 10 via the communication network N1 in a wireless manner. Specifically, as will be described below, the communication unit 13b transmits each data (specifically, first moving image data to be described below) obtained by the plurality of cameras 12 to the server 20 by wirelessly communicating with the server 20 via the communication network N1.

The processing unit 13c performs various types of processing. For example, the processing unit 13c performs processing related to the display by the display apparatus 11. In particular, the processing unit 13c can cause the display apparatus 11 to display a surround view as will be described below by using each data obtained by the plurality of cameras 12.

The storage unit 13d stores various types of information.

The server 20 in Fig. 1 includes a CPU which is an arithmetic processing unit, a ROM which is a memory element storing programs and arithmetic parameters used by the CPU and the like, and a RAM which is a memory element temporarily storing parameters that change appropriately in the execution of the CPU and the like. For example, one server 20 may be provided, or the server 20 may be divided into a plurality of servers. When the server 20 is divided into a plurality of servers, among various types of functions to be described below, a part of the functions and another part of the functions may be implemented by different servers.

Fig. 3 is a block diagram illustrating an example of a functional configuration of the server 20. As illustrated in Fig. 3, the server 20 includes, for example, a communication unit 20a, a generation unit 20b, and a storage unit 20c.

The communication unit 20a wirelessly communicates with an apparatus outside the server 20 via the communication network N1. Specifically, as will be described below, the communication unit 20a receives each data (specifically, the first moving image data to be described below) obtained by the plurality of cameras 12 from the vehicle 10 by wirelessly communicating with the vehicle 10 via the communication network N1.

The generation unit 20b generates data (specifically, second moving image data to be described below) to be transmitted to the user terminal 30 based on the data (specifically, the first moving image data to be described below) received from the vehicle 10. The data generated by the generation unit 20b is transmitted to the user terminal 30 by the communication unit 20a.

The storage unit 20c stores various types of information.

The user terminal 30 in Fig. 1 is, for example, a terminal such as a smartphone and a personal computer owned by the user of the vehicle 10.

The user terminal 30 includes a CPU which is an arithmetic processing unit, a ROM which is a memory element storing programs and arithmetic parameters used by the CPU and the like, and a RAM which is a memory element temporarily storing parameters that change appropriately in the execution of the CPU and the like. For example, one user terminal 30 may be provided, or the user terminal 30 may be divided into a plurality of terminals. When the user terminal 30 is divided into a plurality of terminals, among various types of functions to be described below, a part of the functions and another part of the functions may be implemented by different terminals.

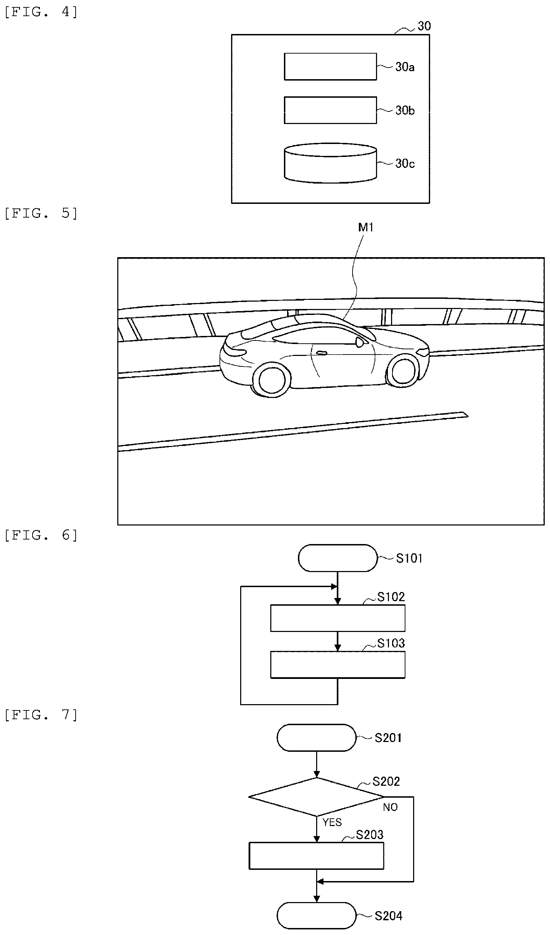

Fig. 4 is a block diagram illustrating an example of a functional configuration of the user terminal 30. As illustrated in Fig. 4, the user terminal 30 includes, for example, a communication unit 30a, a processing unit 30b, and a storage unit 30c.

The communication unit 30a wirelessly communicates with an apparatus outside the user terminal 30 via the communication network N1. Specifically, as will be described below, the communication unit 30a receives data (specifically, the second moving image data to be described below) generated by the generation unit 20b of the server 20 from the server 20 by wirelessly communicating with the server 20 via the communication network N1.

The processing unit 30b performs various types of processing. For example, the processing unit 30b performs processing related to the display by the user terminal 30.

The storage unit 30c stores various types of information.

### Operation of Processing System

The operation of the processing system 1 according to the embodiment of the invention will be described with reference to Fig. 5 to Fig. 11.

As described above, the processing unit 13c of the processing apparatus 13 of the vehicle 10 can cause the display apparatus 11 to display a surround view by using each data obtained by the plurality of cameras 12.

Fig. 5 is a diagram illustrating an example of a surround view. As illustrated in Fig. 5, the surround view is a composite image of looking down the vehicle 10 from the outside. In other words, the surround view is a composite image showing a model M1 of the vehicle 10 and the surroundings thereof from a viewpoint of simulatively looking down the vehicle 10 from the outside. Specifically, the processing unit 13c performs composite processing of merging the image data obtained by the respective cameras 12 and processes a planar image into a bowl-like stereoscopic image in a virtual space. Further, the processing unit 13c generates an image representing the surroundings including the front side, the rear side, the left side, and the right side of the vehicle 10 by setting a viewpoint in the virtual space such that the viewpoint faces the vicinity of the center of the stereoscopic image. Then, the processing unit 13c displays the model M1 such as a 3D model representing the vehicle 10 in the so-generated image. In the example of Fig. 5, a 3D model is used as the model M1 representing the vehicle 10. The model M1 representing the vehicle 10 is stored in advance in the storage unit 13d, for example.

A surround view is mainly used for assisting the driving by the driver at the time of parking the vehicle. For example, when the driver performs a predetermined operation, the processing unit 13c causes the display apparatus 11 to display a surround view. Examples of the predetermined operation described above include an operation using a specific operation unit in the vehicle 10 (e.g., an operation of pressing a button), and an operation of changing a shift position to a position in which the vehicle 10 moves backward (e.g., R range). The driver can perform a driving operation while viewing the surround view, thereby parking the vehicle smoothly. For example, the driver can change the viewpoint of the surround view (i.e., a direction in which the vehicle 10 is viewed in the surround view). Thus, the driver can park the vehicle while switching the viewpoint of the surround view to a desired viewpoint.

With the processing system 1 according to the present embodiment, an added value can be created by further utilizing a surround view in a way other than the way of use described above, as will be described below. Hereinafter, examples of the processing performed by each apparatus of the processing system 1 will be described in sequence.

Fig. 6 is a flowchart illustrating an example of a flow of accumulation processing for first moving image data performed by the processing apparatus 13. Step S101 in Fig. 6 corresponds to the start of the processing flow illustrated in Fig. 6. The processing flow illustrated in Fig. 6 is started, for example, when the driver or a passenger of the vehicle 10 performs a predetermined operation (e.g., an operation of pressing a button, or a voice input) and executed while the vehicle 10 is traveling.

After the processing flow illustrated in Fig. 6 is started, in step S102, the acquisition unit 13a acquires each first moving image data obtained by the plurality of cameras 12.

As described above, each camera 12 is provided to the outer circumferential portion of the vehicle 10, and thus the first moving image data obtained by each camera 12 is moving image data showing the surroundings of the vehicle 10. For example, the acquisition unit 13a acquires the first moving image data showing the front of the vehicle 10 from the camera 12 located on the front side. For example, the acquisition unit 13a acquires the first moving image data showing the rear of the vehicle 10 from the camera 12 located on the rear side. For example, the acquisition unit 13a acquires the first moving image data showing the left side of the vehicle 10 from the camera 12 located on the left side. For example, the acquisition unit 13a acquires the first moving image data showing the right side of the vehicle 10 from the camera 12 located on the right side.

In step S102, specifically, the acquisition unit 13a acquires the first moving image data having a predetermined time width from each camera 12.

Following step S102, in step S103, the processing unit 13c causes the storage unit 13d to store the first moving image data acquired by the acquisition unit 13a in step S102, and returns to step S102.

As described above, in step S103, the storage unit 13d stores the first moving image data acquired by the acquisition unit 13a in step S102. Then, in the processing flow illustrated in Fig. 6, step S102 and step S103 are repeated. Thus, respective pieces of the first moving image data obtained by the plurality of cameras 12 while the vehicle 10 is traveling are accumulated in the storage unit 13d over time. It should be noted that the storage unit 13d may store the first moving image data obtained over time as-is, or may store the first moving image data after changing the order of the first moving image data or the like, for example.

Fig. 7 is a flowchart illustrating an example of a flow of transmission processing for the first moving image data performed by the processing apparatus 13. Step S201 in Fig. 7 corresponds to the start of the processing flow illustrated in Fig. 7. Step S204 in Fig. 7 corresponds to the end of the processing flow illustrated in Fig. 7. The processing flow illustrated in Fig. 7 is started, for example, when the vehicle 10 finishes traveling (for example, when the vehicle 10 is stopped and the ignition is turned off).

After the processing flow illustrated in Fig. 7 is started, in step S202, the acquisition unit 13a determines whether a transmission command for the first moving image data has been acquired.

As will be described below, in the processing system 1, the first moving image data accumulated in the vehicle 10 by the accumulation processing for the first moving image data is transmitted to the server 20, the second moving image data of a surround view is generated based on the first moving image data, and the user terminal 30 can download the second moving image data from the server 20. As a result, an added value can be created by utilizing a surround view, as will be described below.

The driver of the vehicle 10 can select whether to transmit the first moving image data to the server 20. The transmission command for the first moving image data is a command for transmitting the first moving image data accumulated in the storage unit 13d during current traveling to the server 20. For example, the driver of the vehicle 10 can input a transmission command for the first moving image data to the processing apparatus 13 by performing a specific operation using an input apparatus in the vehicle 10.

When it is determined that the transmission command for the first moving image data has not been acquired (step S202/NO), the transmission of the first moving image data is not performed and the processing flow illustrated in Fig. 7 is ended. On the other hand, when it is determined that the transmission command for the first moving image data has been acquired (step S202/YES), the processing proceeds to step S203.

When YES is determined in step S202, in step S203, the communication unit 13b transmits the first moving image data accumulated in the storage unit 13d during current traveling to the server 20, and the processing flow illustrated in Fig. 7 is ended.

For example, when inputting a transmission command for the first moving image data to the processing apparatus 13, the driver of the vehicle 10 may be able to specify a part of the first moving image data (e.g., the first moving image data of a specific time period) out of the first moving image data accumulated in the storage unit 13d as the first moving image data to be transmitted to the server 20. In that case, in step S203, the communication unit 13b transmits, to the server 20, only the part of the first moving image data specified by the driver out of the first moving image data accumulated in the storage unit 13d during current traveling.

In the above description, an example in which the first moving image data is transmitted when a transmission command for the first moving image data is acquired has been described. However, for example, the communication unit 13b may automatically transmit the first moving image data at predetermined time intervals while the vehicle 10 is traveling.

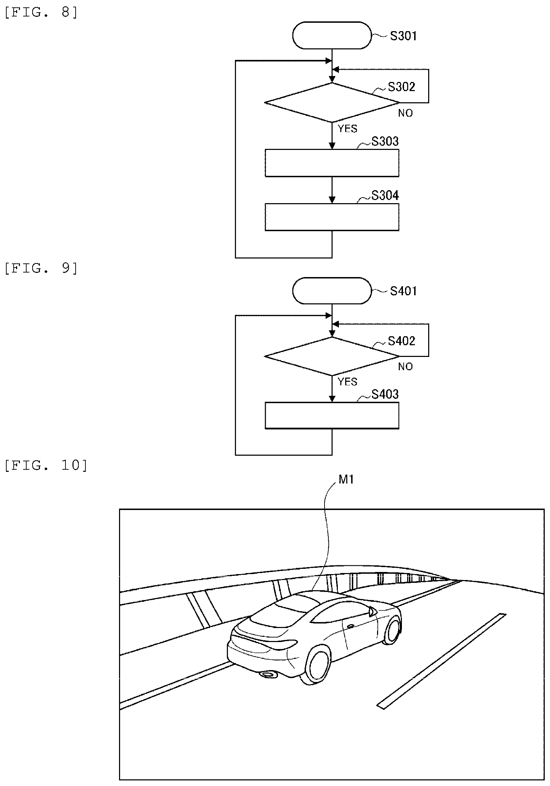

Fig. 8 is a flowchart illustrating an example of a flow of generation processing for the second moving image data performed by the server 20. Step S301 in Fig. 8 corresponds to the start of the processing flow illustrated in Fig. 8.

After the processing flow illustrated in Fig. 8 is started, in step S302, the communication unit 20a determines whether the first moving image data transmitted by the communication unit 13b of the processing apparatus 13 of the vehicle 10 has been received.

When it is determined that the first moving image data has not been received (step S302/NO), step S302 is repeated. On the other hand, when it is determined that the first moving image data has been received (step S302/YES), the processing proceeds to step S303. In the server 20, the first moving image data received is stored in the storage unit 20c.

When YES is determined in step S302, in step S303, the generation unit 20b generates, based on the first moving image data, the second moving image data of a surround view which is a composite image of looking down the vehicle 10 from the outside.

In step S303, the generation unit 20b generates, for example, the moving image data of the surround view illustrated in Fig. 5 above as the second moving image data. For example, the generation unit 20b performs composite processing of merging the first moving image data obtained by the respective cameras 12 and processes a planar moving image data into a bowl-like stereoscopic moving image data in a virtual space. Further, the generation unit 20b generates a moving image data representing the surroundings including the front side, the rear side, the left side, and the right side of the vehicle 10 by setting a viewpoint in the virtual space such that the viewpoint faces the vicinity of the center of the stereoscopic moving image data. Then, the generation unit 20b displays the model M1 such as a 3D model representing the vehicle 10 in the so-generated moving image data. It should be noted that the model M1 representing the vehicle 10 is stored in advance in the storage unit 20c, for example.

Following step S303, in step S304, the generation unit 20b causes the storage unit 20c to store the second moving image data generated in step S303, and returns to step S302.

As described above, in step S304, the storage unit 20c stores the second moving image data generated by the generation unit 20b in step S303. Then, in the processing flow illustrated in Fig. 8, step S302, step S303, and step S304 are repeated. Thus, every time the first moving image data is transmitted from the vehicle 10 to the server 20, the second moving image data is generated based on each of the first moving image data and accumulated in the storage unit 20c.

Fig. 9 is a flowchart illustrating an example of a flow of transmission processing for the second moving image data performed by the server 20. Step S401 in Fig. 9 corresponds to the start of the processing flow illustrated in Fig. 9.

After the processing flow illustrated in Fig. 9 is started, in step S402, the communication unit 20a determines whether a transmission request for the second moving image data has been received.

Here, the user of the user terminal 30 can download the desired second moving image data from the server 20 to the user terminal 30. The transmission request for the second moving image data is a request for downloading the desired second moving image data from the server 20 to the user terminal 30. For example, the user of the user terminal 30 can input a transmission request for the second moving image data to the user terminal 30 by performing a specific operation using an input apparatus provided to the user terminal 30. When the transmission request for the second moving image data is input to the user terminal 30, the user terminal 30 transmits the transmission request to the server 20.

When it is determined that the transmission request for the second moving image data has not been received (step S402/NO), the transmission of the second moving image data is not performed, and step S402 is repeated. On the other hand, when it is determined that the transmission request for the second moving image data has been received (step S402/YES), the processing proceeds to step S403.

When YES is determined in step S402, in step S403, the communication unit 20a transmits the second moving image data specified in the transmission request received out of the second moving image data accumulated in the storage unit 20c to the communication unit 30a of the user terminal 30, and returns to step S402. It should be noted that in the user terminal 30, the second moving image data received by the communication unit 30a is stored in the storage unit 30c.

For example, out of the second moving image data accumulated in the server 20, only the second moving image data generated based on the first moving image data transmitted from the vehicle 10 preliminarily associated with the user of the user terminal 30 can be downloaded to the user terminal 30. In this case, the user can download, to the user terminal 30, the second moving image data generated based on the first moving image data acquired while the user is driving the vehicle 10. Thus, the user can download the second moving image data of a surround view of looking down the vehicle 10, which the user actually drove in the past, from the outside.

When the second moving image data is downloaded from the server 20 to the user terminal 30, the user of the user terminal 30 can replay and view the downloaded second moving image data on the user terminal 30. In addition, the user can share the downloaded second moving image data with another person via a social networking service. In this way, the user can enjoy viewing the second moving image data and sharing the second moving image data with another person.

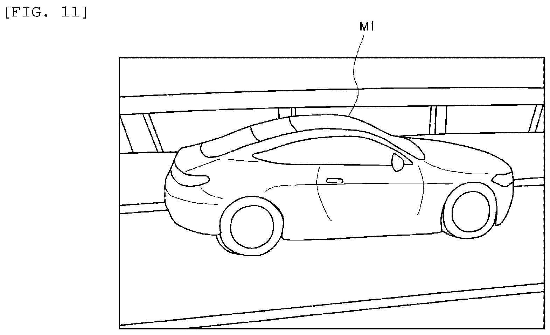

Here, the generation unit 20b of the server 20 may generate the second moving image data in a data format in which processing of the second moving image data can be executed after the generation of the second moving image data. In that case, after the second moving image data is downloaded from the server 20 to the user terminal 30, the user of the user terminal 30 can process the downloaded second moving image data. Further, the user can share the processed second moving image data with another person via a social networking service. An example of processing of the second moving image data will be described below with reference to Fig. 10 and Fig. 11. Fig. 10 and Fig. 11 are diagrams illustrating examples in which the second moving image data illustrated in Fig. 5 is processed.

For example, as illustrated in Fig. 10, the user of the user terminal 30 may be able to switch viewpoints of the downloaded second moving image data illustrated in Fig. 5. In that case, the generation unit 20b of the server 20 generates the second moving image data in a data format in which switching of viewpoints can be executed as the processing of the second moving image data after the generation of the second moving image data. When such second moving image data is downloaded to the user terminal 30, the user of the user terminal 30 can switch viewpoints of the downloaded second moving image data.

In addition, for example, as illustrated in Fig. 11, the user of the user terminal 30 may be able to enlarge the downloaded second moving image data illustrated in Fig. 5. Alternatively, the user of the user terminal 30 may be able to reduce the downloaded second moving image data illustrated in Fig. 5. In that case, the generation unit 20b of the server 20 generates the second moving image data in a data format in which enlargement and reduction can be executed as the processing of the second moving image data after the generation of the second moving image data. When such second moving image data is downloaded to the user terminal 30, the user of the user terminal 30 can enlarge or reduce the downloaded second moving image data.

It should be noted that the generation unit 20b of the server 20 may generate the second moving image data in a data format in which other types of processing than those described above can be executed after the generation of the second moving image data. That is, the user of the user terminal 30 may be able to perform other types of processing than those described above on the downloaded second moving image data. For example, the user of the user terminal 30 may be able to perform processing of adding an object such as a character, a figure, or a symbol to the downloaded second moving image data. In addition, for example, the user of the user terminal 30 may be able to perform processing of adjusting a color or brightness on the downloaded second moving image data.

In the foregoing, the examples of the processing performed in the processing system 1 have been described with reference to Fig. 5 to Fig. 11. However, the processing performed in the processing system 1 may be the processing as a result of making changes on the above-described processing example.

For example, the division of the processing performed in the processing system 1 among the processing apparatus 13 of the vehicle 10, the server 20, and the user terminal 30 may be different from the above-described example. For example, a part of the processing performed by the server 20 described above may be assigned to the processing apparatus 13 of the vehicle 10. For example, the processing apparatus 13 of the vehicle 10 may perform a part or all of the processing of generating the second moving image data. In that case, the second moving image data may be transmitted from the processing apparatus 13 of the vehicle 10 to the user terminal 30.

### Effects of Processing System

The effects of the processing system 1 according to the embodiment of the invention will be described.

The processing system 1 includes: the acquisition unit 13a that acquires first moving image data obtained by the plurality of cameras 12 provided to the outer circumferential portion of the vehicle 10 while the vehicle 10 is traveling; the storage unit 13d that stores the first moving image data acquired by the acquisition unit 13a; and the generation unit 20b that generates second moving image data of a surround view which is a composite image of looking down the vehicle 10 from the outside based on the first moving image data stored in the storage unit 13d. Accordingly, the user can enjoy viewing the second moving image afterward and sharing the second moving image data with another person. In this way, according to the processing system 1, an added value can be created by utilizing a surround view.

Preferably, in the processing system 1, the generation unit 20b generates the second moving image data in a data format in which processing of the second moving image data can be executed after the generation of the second moving image data. Accordingly, the user can process the second moving image data to finish the second moving image data as desired moving image data. Thus, the added value created by utilizing a surround view can be increased.

Preferably, in the processing system 1, the above-described processing includes switching of viewpoints. Accordingly, the user can switch the viewpoints of the second moving image data to more appropriately finish the second moving image data as desired moving image data. Thus, the added value created by utilizing a surround view can be more appropriately increased.

Preferably, in the processing system 1, the above-described processing includes enlargement and reduction. Accordingly, the user can enlarge or reduce the second moving image data to more appropriately finish the second moving image data as desired moving image data. Thus, the added value created by utilizing a surround view can be more appropriately increased.

Preferably, the processing system 1 includes the vehicle 10, the server 20, and the user terminal 30. The vehicle 10 is provided with the processing apparatus 13, and the processing apparatus 13 includes the acquisition unit 13a, the storage unit 13d, and a first communication unit (the communication unit 13b in the above-described example) that transmits the first moving image data stored in the storage unit 13d. The server 20 includes a second communication unit (the communication unit 20a in the above-described example) that receives the first moving image data transmitted by the first communication unit and the generation unit 20b, and the second communication unit transmits the second moving image data. The user terminal 30 includes a third communication unit (the communication unit 30a in the above-described example) that receives the second moving image data transmitted by the second communication unit. Accordingly, the user can more appropriately take enjoyment in viewing the second moving image data by himself/herself and sharing the second moving image data with another person. In this way, according to the processing system 1, creation of an added value by utilizing a surround view can be more appropriately achieved.

Although the preferred embodiment of the invention has been described above with reference to the accompanying drawings, it is obvious that the invention is not limited to the above-described embodiment, and it is also obvious that various changes and modifications within the scope described in the claims also belong to the technical scope of the invention.

For example, the processing described in the present specification using a flowchart may not necessarily be performed in the order shown in the flowchart. Some processing steps may be performed in parallel. In addition, additional processing steps may be employed, or some processing steps may be omitted.

In addition, for example, the series of processing performed by the processing apparatus 13 described above may be implemented using any of software, hardware, and a combination of software and hardware. For example, a program constituting the software is stored in advance in a storage medium provided inside or outside an information processing apparatus.

In addition, for example, the series of processing performed by the server 20 described above may be implemented using any of software, hardware, and a combination of software and hardware. For example, a program constituting the software is stored in advance in a storage medium provided inside or outside an information processing apparatus.

In addition, for example, the series of processing performed by the user terminal 30 described above may be implemented using any of software, hardware, and a combination of software and hardware. For example, a program constituting the software is stored in advance in a storage medium provided inside or outside an information processing apparatus.

### Reference Signs List

1: Processing system
10: Vehicle
11: Display apparatus
12: Camera
13: Processing apparatus
13a: Acquisition unit
13b: Communication unit (first communication unit)
13c: Processing unit
13d: Storage unit
20: Server
20a: Communication unit (second communication unit)
20b: Generation unit
20c: Storage unit
30: User terminal
30a: Communication unit (third communication unit)
30b: Processing unit
30c: Storage unit
M1: Model
N1: Communication network

## Claims

1. A processing system comprising:
an acquisition unit (13a) configured to acquire first moving image data obtained by a plurality of cameras (12) provided to an outer circumferential portion of a vehicle (10) while the vehicle (10) is traveling;
a storage unit (13d) configured to store the first moving image data acquired by the acquisition unit (13a); and
a generation unit (20b) configured to generate second moving image data of a surround view which is a composite image of looking down the vehicle (10) from an outside based on the first moving image data stored in the storage unit (13d).

2. The processing system according to claim 1, wherein the generation unit (20b) generates the second moving image data in a data format in which processing of the second moving image data can be executed after generation of the second moving image data.

3. The processing system according to claim 2, wherein the processing includes switching of viewpoints.

4. The processing system according to claim 2, wherein the processing includes enlargement and reduction.

5. The processing system according to any one of claims 1 to 4, wherein
the processing system (1) includes the vehicle (10), a server (20), and a user terminal (30),
the vehicle (10) includes a processing apparatus (13), the processing apparatus (13) including the acquisition unit (13a), the storage unit (13d), and a first communication unit (13b), the first communication unit (13b) being configured to transmit the first moving image data stored in the storage unit (13d),
the server (20) includes a second communication unit (20a) and the generation unit (20b), the second communication unit (20a) being configured to receive the first moving image data transmitted by the first communication unit (13b),
the second communication unit (20a) transmits the second moving image data, and
the user terminal (30) includes a third communication unit (30a) configured to receive the second moving image data transmitted by the second communication unit (20a).

6. A processing method causing:
an acquisition unit (13a) of a processing system (1) to acquire first moving image data obtained by a plurality of cameras (12) provided to an outer circumferential portion of a vehicle (10) while the vehicle (10) is traveling;
a storage unit (13d) of the processing system (1) to store the first moving image data acquired by the acquisition unit (13a); and
a generation unit (20b) of the processing system (1) to generate second moving image data of a surround view which is a composite image of looking down the vehicle (10) from an outside based on the first moving image data stored in the storage unit (13d).
